# EUROPÄISCHE PATENTSCHRIFT

(11) **EP 0 706 447 B1**
(45) Veröffentlichungstag und Bekanntmachung des Hinweises auf die Patenterteilung: **14.05.1997**
(21) Anmeldenummer: 94920932.4
(22) Anmeldetag: 13.06.1994
(51) Int. Cl.: B29C 45/27

(54) **HEISSKANALVERTEILER**
HOT RUNNER DISTRIBUTOR
DISTRIBUTEUR A CANAUX CHAUFFANTS

(30) Priorität: 22.06.1993 DE 4320584
(43) Veröffentlichungstag der Anmeldung: 17.04.1996
(73) Patentinhaber: Wolff, Hans-Martin, CH-2825 Courchapoix (CH)
(72) Erfinder: Wolff, Hans-Martin, CH-2825 Courchapoix (CH)
(74) Vertreter: Katscher, Helmut, Dipl.-Ing.
(86) Internationale Anmeldenummer: EP9401929
(87) Internationale Veröffentlichungsnummer: WO9500312

(56) Entgegenhaltungen:
- EP-A- 0 108 333
- US-A- 3 553 788
- US-A- 4 043 726
- US-A- 4 219 323
- US-A- 4 422 841

## Beschreibung

Die Erfindung betrifft einen Heißkanalverteiler zur Zufuhr von thermoplastischer Kunststoffschmelze durch einen Schmelzekanal zu Heißkanaldüsen an Formwerkzeugen, mit Rohrsteckverbindungen zwischen Abschnitten des Heißkanalverteilers und benachbarten Anschlußteilen.

Heißkanalverteiler dienen dazu, thermoplastische Kunststoffschmelze von einem Extruder zu einer oder mehreren Heißkanaldüsen zu leiten, durch die die Kunststoffschmelze in ein Formwerkzeug eingespritzt wird. Um die thermoplastische Kunststoffschmelze in dem vorgegebenen, oftmals sehr engen Temperaturbereich zu halten, werden die Heißkanalverteiler - ebenso wie die Heißkanaldüsen - beheizt.

Die dabei auftretenden, erheblichen Temperaturänderungen führen zu unvermeidbaren Wärmedehnungen und damit Längenänderungen des Heißkanalverteilers. Wenn der Heißkanalverteiler ohne Dehnungsmöglichkeit an die Heißkanaldüsen angeschlossen ist, führen die temperaturbedingten Längenänderungen des Heißkanalverteilers zu seitlichen Verlagerungen der Heißkanaldüsen. Dadurch können im Bereich der Heißkanaldüsen Undichtheiten auftreten. Die austretende heiße Kunststoffschmelze verunreinigt das Formwerkzeug und ist nach dem Erstarren nur sehr schwer zu entfernen.

Um diese in der Praxis sehr erheblichen Schwierigkeiten zu überwinden, ist schon versucht worden, den Heißkanalverteiler so auszubilden, daß die auftretenden Wärmedehnungen dort aufgenommen werden können, ohne sich auf die Lage der Heißkanaldüsen auszuwirken. Zu diesem Zweck wurden bei einem Heißkanalverteiler der eingangs genannten Gattung Rohrsteckverbindungen vorgesehen, die eine teleskopartige Relativverschiebung zwischen Abschnitten des Heißkanalverteilers und benachbarten Anschlußteilen ermöglichen sollten, nämlich den angeschlossenen Heißkanaldüsen oder weiteren Abschnitten des Heißkanalverteilers.

Diese Rohrsteckverbindungen mußten jedoch mit einer sehr engen Passung ausgeführt werden, um den Austritt von heißer Kunststoffschmelze zu verhindern. Die Herstellung dieser Passungen ist nicht nur mit großem Aufwand verbunden; hinzu kommt auch, daß schon geringste Beschädigungen an den Rohrsteckverbindungen, insbesondere an den Passungsflächen, zu Undichtheiten führten.

Da bei diesen Rohrsteckverbindungen die beiden jeweils relativ zueinander bewegbaren Teile beheizt waren, konnte schon bei einer geringen Undichtheit eine große Menge von Kunststoffschmelze austreten, weil die Kunststoffschmelze bei der dort herrschenden Temperatur vollständig flüssig ist. Diese Rohrsteckverbindungen haben sich daher in der Praxis nicht bewährt.

Aufgabe der Erfindung ist es, einen Heißkanalverteiler der eingangs genannten Gattung so auszubilden, daß an den Rohrsteckverbindungen keine Undichtheiten auftreten können, ohne daß hierfür enge Passungen mit hoher Genauigkeit eingehalten werden müssen.

Diese Aufgabe wird erfindungsgemäß dadurch gelöst, daß die Rohrsteckverbindungen jeweils zwei miteinander fluchtende, den Schmelzekanal umschließende Rohrenden aufweisen, die durch eine Dehnfuge voneinander getrennt sind, und daß die beiden Rohrenden im Bereich ihrer Dehnfuge von einem gemeinsamen Kühlring umschlossen sind.

Die Abdichtung im Bereich der Dehnfuge erfolgt hierbei durch die in die Dehnfuge eindringende Kunststoffschmelze selbst. Durch die Kühlwirkung des die Trennfuge umgebenden Kühlrings wird bewirkt, daß die Kunststoffschmelze im äußeren Bereich der Dehnfuge erstarrt und auf diese Weise unter allen Betriebsbedingen eine sichere Abdichtung gewährleistet. Dabei ist es nicht erforderlich, enge Passungen einzuhalten. Die Dehnfuge kann ausreichend groß gewählt werden, um jede im Betrieb auftretende Wärmedehnung zu kompensieren. Dadurch wird verhindert, daß die im Heißkanalverteiler auftretenden Wärmedehnungen auf die angeschlossenen Heißkanaldüsen übertragen werden.

Die so gestalteten Rohrsteckverbindungen können an Abschnitten des Heißkanalverteilers mit längsverlaufendem Schmelzekanal vorgesehen werden, beispielsweise am Übergang zu den Heißkanaldüsen. Aber auch zwischen der Heißkanaldüse und einem axial dazu verlaufenden, anschließenden Abschnitt des Schmelzekanals kann eine derartige Rohrsteckverbindung vorteilhaft vorgesehen werden, ebenso zwischen einem Anschlußstück des Extruders und dem Heißkanalverteiler.

Gemäß einer bevorzugten Ausführungsform der Erfindung ist vorgesehen, daß die beiden Rohrenden in ihren beiden der Dehnfuge zugekehrten Stirnflächen jeweils eine umlaufende, sich axial erstreckende Stirnnut aufweisen. Diese Stirnnut stellt im stirnseitigen Bereich der Rohrenden einen wärmeisolierenden Hohlraum dar, durch den die Wärmeabgabe an den Kühlring verringert wird.

Durch die Stirnnut wird jedes Rohrende in einen innenliegenden Ring, der im wesentlichen die erhöhte Temperatur des Schmelzekanals aufweist, und einen außenliegenden, konzentrisch hierzu angeordneten Ringabschnitt unterteilt, der im wesentlichen die niedrigere Temperatur des Kühlrings aufweist.

Vorzugsweise ist ein gemeinsamer Isolierring in beiden einander zugekehrten Stirnnuten aufgenommen, der vorzugsweise aus wärmeisolierendem Material besteht. Der Isolierring stützt den dünnwandigen, innenliegenden, durch den hohen Spritzdruck beaufschlagten Ringabschnitt der Rohrenden nach außen ab.

Damit der nicht über die gesamte Tiefe der Stirnnuten reichende Isolierring trotz der Wärmedehnungsbewegungen der Rohrenden in seiner mittleren Lage verbleibt, kann vorgesehen sein, daß der Isolierring an seinem inneren und/oder äußeren Umfang einen in der Dehnfuge angeordneten umlaufenden Bund aufweist, der eine unzulässige axiale Verschiebung des Isolierrings verhindert.

Der Kühlring kann an seinem äußeren Umfang mit Kühlrippen versehen sein und kann durch vorbeistreichende Luft, beispielsweise von einem Gebläse, gekühlt werden.

Stattdessen ist es auch möglich, den Kühlring mit einem von einem Kühlmedium, vorzugsweise Kühlflüssigkeit durchströmenden Kühlkanal zu versehen.

Der Kühlring kann auch an gekühlten Platten anliegen, um die Wärme abzuleiten.

Als besonders vorteilhaft hat es sich erwiesen, den Kühlring aus zwei miteinander verbundenen Ringhalbschalen aufzubauen. Dadurch wird die Montage und Demontage des Heißkanalverteilers wesentlich erleichtert. Insbesondere können einzelne Abschnitte des Heißkanalverteilers herausgenommen werden, beispielsweise nach einem Ausfall der Heizeinrichtung, ohne daß die benachbarten Bauteile gelöst werden müßten. Die beiden im wesentlichen halbkreisförmigen Teile des Kühlrings bilden eine Schelle, die abschließend über die beiden miteinander fluchtenden Rohrenden der Rohrsteckverbindung gesetzt und miteinander verschraubt werden.

Um den Verschleiß an der zentralen Bohrung des Kühlrings gering zu halten, kann der Kühlring an seiner die Rohrenden umschließenden Bohrungswand mit einer verschleißfesten, harten Innenschale ausgeführt werden, während der übrige Teil des Kühlrings vorzugsweise aus Guß besteht.

Nachfolgend werden Ausführungsbeispiele der Erfindung näher erläutert, die in der Zeichnung dargestellt sind. Es zeigt:
Fig. 1 einen Heißkanalverteiler eines Formwerkzeugs in einem Teilschnitt,
Fig. 2 einen Schnitt längs der Linie II-II in Fig. 1,
Fig. 3 einen vergrößerten Schnitt im Bereich einer Rohrsteckverbindung des Heißkanalverteilers nach Fig. 1,
Fig. 4 in einem Schnitt eine abgewandelte Ausführungsform eines Kühlrings an einer Rohrsteckverbindung und
Fig. 5 eine weitere Ausführung des Kühlrings.

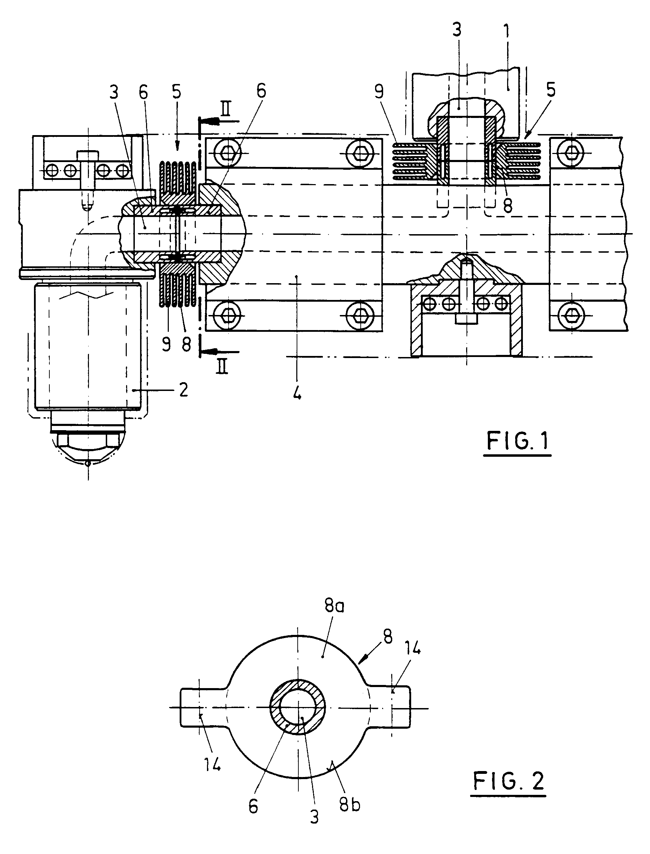

Der in Fig. 1 dargestellte Heißkanalverteiler ist zwischen einem zentralen Anschlußstück 1 eines (nicht dargestellten) Extruders und mehreren Heißkanaldüsen 2 angeordnet, wobei in Fig. 1 nur eine der Heißkanaldüsen 2 dargestellt ist. Der Heißkanalverteiler dient dazu, von dem Extruder gelieferte Kunststoffschmelze durch einen auf der vorgegebenen Temperatur gehaltenen Schmelzekanal 3 zu den Heißkanaldüsen 2 zu leiten, die die Kunststoffschmelze in ein Formwerkzeug einspritzen.

Der Heißkanalverteiler weist elektrisch beheizte Abschnitte 4 auf, die mit den angeschlossenen Heißkanaldüsen 2 jeweils durch eine Rohrsteckverbindung 5 verbunden sind. Wie in Fig. 1 dargestellt ist, ist eine entsprechende Rohrsteckverbindung 5 auch am Übergang zwischen dem Anschlußstück 1 des Extruders und dem Heißkanalverteiler angeordnet. Auch zwischen einzelnen, miteinander fluchtenden Abschnitten 4 des Heißkanalverteilers können entsprechende Rohrsteckverbindungen 5 vorgesehen sein.

Jede der Rohrsteckverbindungen 5 weist jeweils zwei miteinander fluchtende, den Schmelzekanal 3 umschließende Rohrenden 6 auf. Diese Rohrenden 6 sind in die benachbarten Abschnitte des Heißkanalverteilers bzw. der Heißkanaldüse 2 entweder eingelötet, eingeschrumpft oder als deren fester Bestandteil ausgeführt.

Die beiden Rohrenden 6 jeder Rohrsteckverbindung 5 sind durch eine Dehnfuge 7 voneinander getrennt. Die Breite der Dehnfuge 7 ändert sich bei Wärmedehnungen innerhalb des Heißkanalverteilers. Im Bereich der Dehnfuge 7 sind die beiden Rohrenden 6 von einem gemeinsamen Kühlring 8 umschlossen. Der Kühlring 8 ist bei der in den Fig. 1-3 dargestellten Ausführungsform an seinem äußeren Umfang mit Kühlrippen 9 versehen, die durch die umgebende Luft gekühlt werden. Hierzu kann ein (nicht dargestelltes) Kühlgebläse vorgesehen sein.

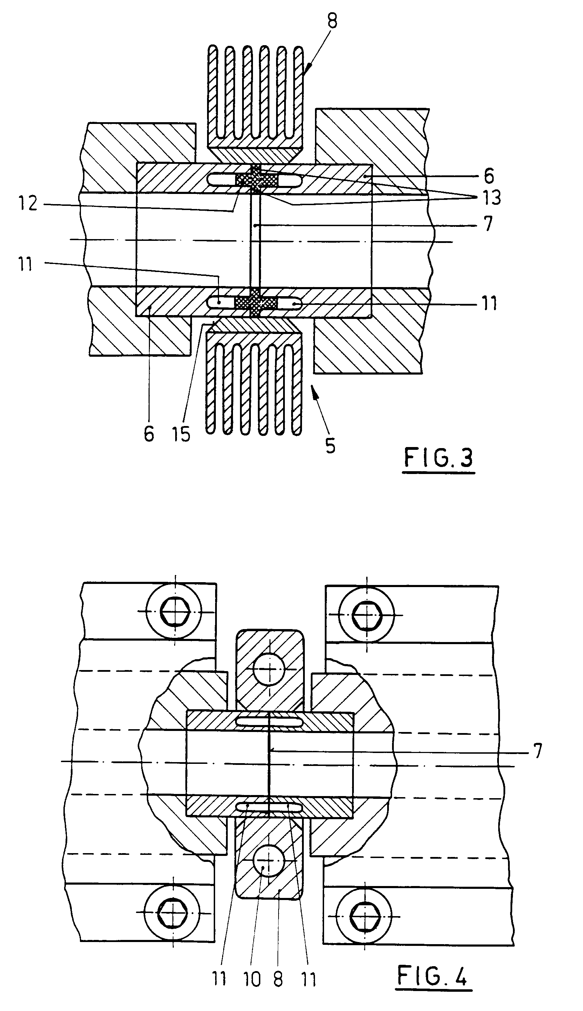

Bei der in Fig. 4 gezeigten Ausführungsform weist der Kühlring 8 einen von einem Kühlmedium, vorzugsweise Kühlflüssigkeit durchströmten Kühlkanal 10 auf.

Die beiden Rohrenden 6 weisen bei allen dargestellten Ausführungsbeispielen in ihren beiden der Dehnfuge 7 zugekehrten Stirnflächen jeweils eine umlaufende Stirnnut 11 auf, die sich in axialer Richtung in das Rohrende 6 hineinerstreckt.

Wie links in Fig. 1 sowie in Fig. 3 dargestellt ist, ist in den beiden einander zugekehrten Stirnnuten 11 ein gemeinsamer Isolierring 12 aufgenommen, der aus einem gut wärmeisolierendem Material, vorzugsweise Metall besteht. Der Isolierring 12 weist an seinem inneren und äußeren Umfang jeweils einen umlaufenden Bund 13 auf, der in der Trennfuge 7 angeordnet ist und eine Längsverschiebung des Isolierrings 12 verhindert.

Bei der in Fig. 1 dargestellten Ausführungsform besteht der Kühlring 8 aus Gußmaterial, beispielsweise einer Aluminiumlegierung. Fig. 2 zeigt, daß der Kühlring 8 aus zwei miteinander verbundenen, im wesentlichen halbkreisförmigen Ringhalbschalen 8a und 8b besteht, die zur Bildung einer Ringschelle durch Verschraubungen 14 miteinander verbunden sind.

Abweichend hiervon ist in Fig. 3 eine Ausführungsform des Kühlrings 8 gezeigt, bei der der Kühlring 8 an seiner die Rohrenden 6 umschließenden Bohrungswand eine verschleißfeste, harte Innenschale 15 aus gehärtetem Stahl aufweist.

Oben in Fig. 1 sowie am Beispiel nach Fig. 4 ist dargestellt, daß an der Rohrsteckverbindung auch auf den in die Dehnfuge 7 eingelegten Isolierring 12 verzichtet werden kann. Hierbei bildet die in die Dehnfuge 7 und in die Stirnnuten 11 eindringende, teilweise erstarrende Kunststoffschmelze einen Isolierring zwischen den beiden einander zugekehrten Rohrenden 6.

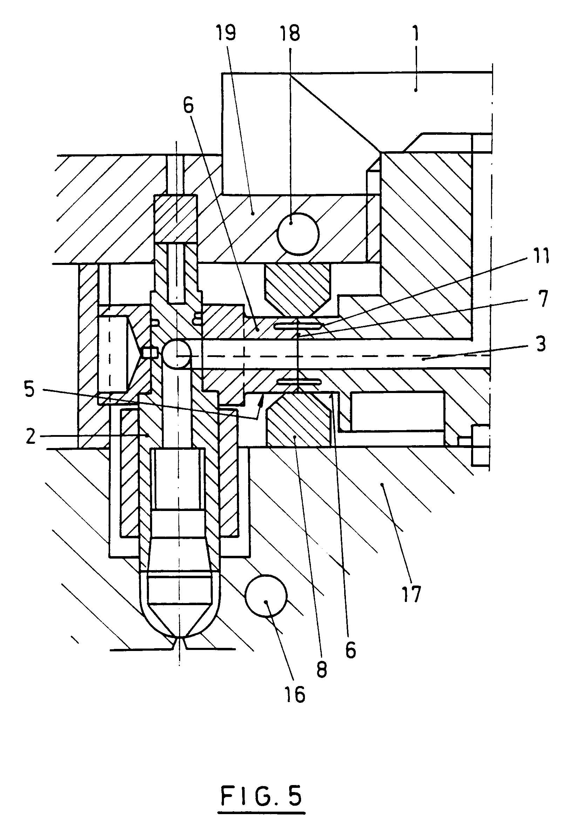

Beim Beispiel nach Fig. 5 sind die Rohrenden 6 einstückig mit den anschließenden Abschnitten ausgeführt. Der Kühlring 8 liegt unten an einer durch Kühlkanäle 16 gekühlten Werkzeugplatte 17 und oben an einer durch Kühlkanäle 18 gekühlten Gegendruckplatte 19 an. Die Kühlung der Steckverbindung 5 erfolgt durch Ableitung der Wärme aus dem Kühlring 8 in die gekühlten Platten 17 und 19.

Allen Ausführungsformen ist gemeinsam, daß durch die Wirkung des Kühlrings 8 im Bereich der Dehnfuge 7 eine Abkühlung und somit eine thermische Trennung der beiden benachbarten, beheizten Teile des Heißkanalverteiler erfolgt.

## Patentansprüche

1. Heißkanalverteiler zur Zufuhr von thermoplastischer Kunststoffschmelze durch einen Schmelzekanal (3) zu Heißkanaldüsen (2) an Formwerkzeugen, mit Rohrsteckverbindungen (5) zwischen Abschnitten des Heißkanalverteilers und benachbarten Anschlußteilen, dadurch gekennzeichnet, daß die Rohrsteckverbindungen (5) jeweils zwei miteinander fluchtende, den Schmelzekanal (3) umschließende Rohrenden (6) aufweisen, die durch eine Dehnfuge (7) voneinander getrennt sind, und daß die beiden Rohrenden (6) im Bereich ihrer Dehnfuge (7) von einem gemeinsamen Kühlring (8) umschlossen sind.

2. Heißkanalverteiler nach Anspruch 1, dadurch gekennzeichnet, daß die beiden Rohrenden (6) in ihren beiden der Dehnfuge (7) zugekehrten Stirnflächen jeweils eine umlaufende, sich axial erstreckende Stirnnut (11) aufweisen.

3. Heißkanalverteiler nach Anspruch 2, dadurch gekennzeichnet, daß ein gemeinsamer Isolierring (12) in beiden einander zugekehrten Stirnnuten (11) aufgenommen ist.

4. Heißkanalverteiler nach Anspruch 3, dadurch gekennzeichnet, daß der Isolierring (12) an seinem inneren und/oder äußeren Umfang einen in der Dehnfuge (7) angeordneten umlaufenden Bund (13) aufweist.

5. Heißkanalverteiler nach Anspruch 4, dadurch gekennzeichnet, daß der Isolierring (12) aus wärmeisolierendem Material besteht.

6. Heißkanalverteiler nach Anspruch 1, dadurch gekennzeichnet, daß der Kühlring (8) an seinem äußeren Umfang mit Kühlrippen (9) versehen ist.

7. Heißkanalverteiler nach Anspruch 1, dadurch gekennzeichnet, daß der Kühlring (8) einen von einem Kühlmedium durchströmten Kühlkanal (10) aufweist.

8. Heißkanalverteiler nach Anspruch 1, dadurch gekennzeichnet, daß der Kühlring (8) an gekühlten Platten (17, 19) anliegt.

9. Heißkanalverteiler nach einem der Ansprüche 1 - 8, dadurch gekennzeichnet, daß der Kühlring (8) aus zwei miteinander verbundenen Ringhalbschalen (8a, 8b) besteht.

10. Heißkanalverteiler nach einem der Ansprüch 1 - 9, dadurch gekennzeichnet, daß der Kühlring (8) an seiner die Rohrenden (6) umschließenden Rohrungswand eine verschleißfeste, harte Innenschale aufweist.

## Claims

1. A hot runner distributor for the supply of a thermoplastic plastic melt through a melt channel (3) to hot runner jets (2) of moulding tools comprising plug-in pipe connections (5) between sections of the hot runner distributor and adjacent connecting parts, characterised in that the plug-in pipe connections (5) comprise two pipe ends (6) surrounding the melt channel (3), aligned to each other, separated from each other by an expansion joint (7) and that the two pipe ends (6) are surrounded by a joint cooling ring (8) within the area of their expansion joint (7).

2. A hot runner distributor according to Claim 1, characterized in that the two pipe ends (6) comprise an allround axial face groove (11) in their faces directed towards the expansion joint (7).

3. A hot runner distributor according to Claim 2, characterized in that a joint insulating ring (12) is inserted in both face grooves facing each other.

4. A hot runner distributor according to Claim 3, characterized in that the insulating ring (12) comprises an allround collar (13) on its internal and/or external circumference provided in the expansion joint (7).

5. A hot runner distributor according to Claim 4, characterised in that the insulating ring (12) consists of a thermal insulating material.

6. A hot runner distributor according to Claim 4, characterized in that the cooling ring (8) is provided with cooling fins (9) on its external circumference.

7. A hot runner distributor according to Claim 1, characterized in that the cooling ring (8) comprises a cooling duct (10) through which a coolant flows.

8. A hot runner distributor according to Claim 1, characterized in that the cooling ring (8) is in contact with cooled panels (17, 19).

9. A hot runner distributor according to Claims 1 - 8, characterized in that the cooling ring (8) comprises two annular semi-shells (8a, 8b) connected to each other.

10. A hot runner distributor according to Claims 1 - 9, characterized in that the cooling ring (8) comprises a hard, wear-resistant internal shell on its pipe wall surrounding the pipe ends (6).

## Revendications

1. Distributeur à canaux chauffants pour acheminer une masse fondue de matière thermoplastique synthétique par un canal (3) à des buses (2) de canaux chauffants sur des outils de formage, ledit distributeur comprenant des raccords d'enfichage tubulaires (5) entre des sections du distributeur à canaux chauffants et des pièces de jonction voisines, caractérisé en ce que les raccords d'enfichage tubulaires (5) présentent respectivement deux bouts de tube (6) alignés l'un sur l'autre et enserrant le canal (3) acheminant la masse fondue, lesdits bouts de tube (6) étant séparés l'un de l'autre par un joint de dilatation (7), et en ce que les deux bouts de tube (6) sont enserrés par un anneau de refroidissement commun (8) dans la zone de leur joint de dilatation (7).

2. Distributeur à canaux chauffants selon la revendication 1, caractérisé en ce que les deux bouts de tube (6) présentent, dans leurs deux faces frontales tournées vers le joint de dilatation (7), respectivement une rainure frontale (11) périphérique s'étendant axialement.

3. Distributeur à canaux chauffants selon la revendication 2, caractérisé en ce qu'une bague isolante commune (12) est reçue dans les deux rainures frontales (11) tournées l'une vers l'autre.

4. Distributeur à canaux chauffants selon la revendication 3, caractérisé en ce que la bague isolante (12) présente, sur sa périphérie intérieure et/ou extérieure, une arête périphérique (13) agencée dans le joint de dilatation (7).

5. Distributeur à canaux chauffants selon la revendication 4, caractérisé en ce que la bague isolante (12) est constituée d'un matériau thermo-isolant.

6. Distributeur à canaux chauffants selon la revendication 1, caractérisé en ce que l'anneau de refroidissement (8) est équipé, sur sa périphérie extérieure, de nervures de refroidissement (9).

7. Distributeur à canaux chauffants selon la revendication 1, caractérisé en ce que l'anneau de refroidissement (8) présente un canal de refroidissement (10) parcouru par un réfrigérant.

8. Distributeur à canaux chauffants selon la revendication 1, caractérisé en ce que l'anneau de refroidissement (8) s'applique sur des plaques refroidies (17, 19).

9. Distributeur à canaux chauffants selon l'une quelconque des revendications 1 à 8, caractérisé en ce que l'anneau de refroidissement (8) est constitué de deux demi-coques annulaires (8a, 8b) raccordées l'une à l'autre.

10. Distributeur à canaux chauffants selon l'une quelconque des revendications 1 à 9, caractérisé en ce que l'anneau de refroidissement (8) présente, sur sa paroi tubulaire enserrant les bouts de tube (6), une coque intérieure dure résistant à l'usure.
